# EUROPÄISCHE PATENTANMELDUNG

(11) **EP 4 179 873 A1**
(43) Veröffentlichungstag der Anmeldung: **17.05.2023**
(21) Anmeldenummer: 22206986.6
(22) Anmeldetag: 11.11.2022
(51) Int. Cl.: A01N 31/02, A01N 59/00, A01N 37/36, A01N 25/02, A01P 1/00

(54) **WÄSSRIGE DESINFEKTIONSMITTELZUSAMMENSETZUNG, TÜCHER ODER MOPPS GETRÄNKT MIT DER DESINFEKTIONSMITTELZUSAMMENSETZUNG, VERFAHREN ZUR DESINFEKTION HARTER OBERFLÄCHEN UND VERWENDUNG**

(30) Priorität: 15.11.2021 DE 102021129678
(71) Anmelder: Knieler & Team GmbH, 21227 Bendestorf (DE)
(72) Erfinder: Knieler, Roland, 21227 Bendestorf (DE)
(74) Vertreter: Müller Schupfner & Partner Patent- und Rechtsanwaltspartnerschaft mbB

(57) **Zusammenfassung**

Gegenstand der Erfindung sind gebrauchsfertige, wässrige Desinfektionsmittelzusammensetzungen umfassend Propan-2-ol, Wasserstoffperoxid und Glykolsäure, Tücher und Mopps getränkt mit der Desinfektionsmittelzusammensetzung und deren Verwendung zur Desinfektion harter Oberflächen und ein Verfahren zum Aufbringen der Desinfektionsmittelzusammensetzung auf harte Oberflächen.

## Beschreibung

Die Erfindung betrifft gebrauchsfertige, wässrige Desinfektionsmittelzusammensetzungen umfassend Propan-2-ol, Wasserstoffperoxid und Glykolsäure, Tücher und Mopps getränkt mit der Desinfektionsmittelzusammensetzung und deren Verwendung, sowie ein Verfahren zur Desinfektion harter Oberflächen mit der Desinfektionsmittelzusammensetzung oder den Tüchern oder Mopps.

Desinfektionsmittelkonzentrate, die vor der Anwendung verdünnt werden müssen, verlieren immer mehr an Bedeutung und sind für viele Anwendungsszenarien nicht gewünscht. Ready-to-Use Anwendungen von Desinfektionsmitteln werden dagegen immer populärer. Die Vorteile sind offensichtlich: Die Prozesssicherheit bei der Anwendung ist erhöht, Ab- und Umfüll- und Verdünnungsprozesse sind nicht mehr notwendig, die Produkte sind sofort einsatzbereit und können auch von ungeschultem Personal und Laien zuverlässig und sicher eingesetzt werden.

Weit verbreitete Ready-to-Use Desinfektionsmittel sind alkoholische Mischungen, meist mit einem Alkoholgehalt von größer 50%, d.h. dem Gesamtalkoholgehalt an Ethanol, Propan-1-ol (auch als n-Propanol bezeichnet), Propan-2-ol (auch als isoPropanol oder Isopropanol bezeichnet) oder Mischungen hiervon. Solche Produkte weisen häufig einen hohen Flammpunkt und eine schlechte Materialverträglichkeit gegenüber Kunststoffen auf.

Viele niedrigalkoholische Flächendesinfektionsmittel zeigen wie erwartet eine gute Basiswirksamkeit gegenüber Pilzen, Bakterien und behüllten Viren. Die Produkte haben aber Wirkungslücken bei Sporen wie zum Beispiel von C. difficile (Clostridium difficile oder Clostridioides difficile) oder aber auch bei schwer abzutötenden unbehüllten Viren wie Noroviren.

Auf EU-Ebene wurde die DIN EN 17126:2019-02 als neuer Standard zur Prüfung von Desinfektionsmitteln im humanmedizinischen Umfeld etabliert. Die Anforderungen an die sporizide Wirksamkeit sind dadurch noch höher geworden, es werden mindestens 4-log-Stufen Keimreduktion bei einer maximalen Einwirkzeit von 60 Minuten gefordert. Die Notwendigkeit nach schnell wirksamen und sporenwirksamen Desinfektionsmitteln ist damit nochmals gestiegen.

Aus der US 2012/0213864 A1 und der WO 2002/012428 A1 sind Zusammensetzungen enthaltend Propan-2-ol, Wasserstoffperoxid und Glycolsäure bekannt, die zur Entfernung von Kontaminationen und Verunreinigungen eingesetzt werden. Anwendungsbereiche sind vor allem wasserführende Systeme, ein Hinweis auf Viruswirksamkeiten, Sporenwirksamkeiten oder gar die hier vorgestellten überraschenden synergistischen Wirksamkeitseffekte erfolgt nicht. Für die Desinfektion harter Oberflächen sind diese Zusammensetzungen weder vorgesehen noch geprüft.

In der WO 2004/035718 A2 werden Mischungen zum Auflösen/Entfernen von Biofouling-Rückständen beschrieben. Neben Wasserstoffperoxid und Glycolsäure sind auch Alkohole als mögliche Lösemittel genannt. Hinweise auf sporizide Desinfektion, ein entsprechender Einfluss auf eine Wirksamkeit durch Alkohole wird nicht diskutiert, in den Beispielen tauchen neben Wasser auch keine weiteren Lösemittel oder Glykolsäure auf. Für die Desinfektion harter Oberflächen sind die Mischungen weder vorgesehen noch geprüft.

In weiteren Schriften werden Kombinationen aus Wasserstoffperoxid und Carbonsäuren behandelt. In EP 1139762 B1 werden zusätzlich kurzkettige Alkohole bis zu einem Gehalt von 10% genannt. Eine Differenzierung in primäre und sekundäre Alkohole wird nicht vorgenommen, ein möglicher Einfluss auf die Wirksamkeit wird nicht diskutiert. Gleiches gilt auch für die CA 2584421 A1, in welcher Alkohole neben weiteren Stoffen ganz allgemein als Lösungsmittel in Betracht gezogen werden. Eine Differenzierung in primäre und sekundäre Alkohole wird nicht gemacht und ein möglicher Einfluss auf die Wirksamkeit wird nicht diskutiert.

Die WO 2005/110090 A1 betrifft Hautdesinfektionsmittel, bei denen neben Wasserstoffperoxid und weiteren Stoffen auch Glycolsäure als möglicher Puffer und Alkohole bis zu einer Konzentration von 10 % in Betracht gezogen werden. Ein möglicher Einfluss der Auswahl des Alkohols in Kombination mit der Glycolsäure auf die Wirksamkeit wird nicht diskutiert. Auch ist eine Kombination von Glycolsäure und Propan-2-ol nicht offenbart.

Die EP 2724614 A1 offenbart Desinfektionsmittelzusammensetzungen, insbesondere zur Desinfektion von Eiern und/oder Vorrichtung zur Lagerung, Brut und/oder zum Transport von Eiern. Nach einer bevorzugten Ausführungsform kann die Desinfektionsmittelzusammensetzung als Konzentrat eingesetzt werden umfassend:
12 bis 24 Gew.-% organisches Lösungsmittel, vorzugsweise Ethanol/Isopropanol,
1,1 bis 2,2 Gew.-% Tensid,
5,0 bis 10,0 Gew.-% Peroxid, vorzugsweise Wasserstoffperoxid,
1,8 bis 3,6 Gew.-% eine Carbonsäure, vorzugsweise Essigsäure, und
Rest Wasser (ad 100 Gew.-%).
Die Carbonsäure weist z.B. 2 bis 6 Kohlenstoffatome auf und in einer Aufzählung ist u.a. Glykolsäure genannt. Als Lösungsmittel sind u.a. Ethanol, 1-Propanol, 2-Propanol und Mischungen davon offenbart.

Aufgabe der Erfindung ist es, eine gebrauchsfertige, niedrigalkoholische Desinfektionsmittelzusammensetzung zur Verfügung zu stellen, die sich zur Desinfektion, insbesondere harter Oberflächen eignet, eine gute Desinfektionswirkung zeigt, vor allem auch gegen C. difficile Sporen. Weiterhin soll die Desinfektionsmittelzusammensetzung so beschaffen sein, dass empfindlichere Oberflächenmaterialien nicht angegriffen werden und eine lange Haltbarkeit der Desinfektionsmittelzusammensetzung gegeben ist.

### Zusammenfassung der Erfindung

Die Erfindung ist durch die unabhängigen Patentansprüche gekennzeichnet. Bevorzugte Ausführungsformen sind Gegenstand der Unteransprüche oder nachfolgend beschreiben.

Die Erfindung betrifft einerseits eine Desinfektionsmittelzusammensetzung umfassend zumindest folgende Komponenten
a) 12 bis 45 Gew.% Propan-2-ol;
b) 0,1 bis 5 Gew.% Wasserstoffperoxid, insbesondere 0,1 bis 3 Gew.% Wasserstoffperoxid;
c) 0,001 bis 5 Gew.% Glycolsäure; und
d) mindestens 50 Gew.% Wasser.

Der Anteil der Komponenten a) bis d) in der Desinfektionsmittelzusammensetzung beträgt bevorzugt (auch jeweils unabhängig voneinander):
a) 15 bis 35 Gew.% für das Propan-2-ol;
b) 0,1 bis 3 Gew.% oder 0,5 bis 3 Gew.%, bevorzugt 0,8 bis 2 Gew.%, für das Wasserstoffperoxid;
c) 0,001 bis 3 Gew.%, weiter bevorzugt 0,01 bis 1,5 Gew.% und besonders bevorzugt 0,05 bis 1,0 Gew.% für die für die Glycolsäure; und
d) größer 60 Gew.% für das Wasser.

Bevorzugt machen die Komponenten a) bis d) größer 90 Gew.%, insbesondere größer 95 und ggf. sogar größer 97 Gew.% der Desinfektionsmittelzusammensetzung aus.

Die Angaben beziehen sich jeweils auf die Konzentration der jeweiligen Komponente in der Desinfektionsmittelzusammensetzung und können beispielsweise durch Titration oder über HPLC-Methoden bestimmt werden.

Die Desinfektionsmittelzusammensetzung hat insbesondere einen pH-Wert von 1 bis 5, bevorzugt von 1 bis 3 oder von 2 bis 3, jeweils bei 25°C.

Es wurden gefunden, dass Mischungen von Ethanol, Wasserstoffperoxid und Glycolsäure nicht ausreichend stabil waren und Ethanol oder andere primäre Alkohole zur Esterbildung mit der Glycolsäure neigen, die dem System die Wirkstoffe Ethanol und z.B. Glycolsäure entzieht. Dieser Nachteil trat bei Mischungen, bei denen Ethanol durch den sekundären Alkohol Propan-2-ol ersetzt wurde, nicht auf.

Überraschend hat sich gezeigt, dass die Kombination von Propan-2-ol mit einer Wasserstoffperoxid/Glycolsäure-Mischung zu einer synergistischen Wirkungssteigerung u.a. bei unbehüllten Noroviren und C. difficile Sporen führt.

Die erfindungsgemäße Desinfektionsmittelzusammensetzung ist gebrauchsfertig und insbesondere zur Desinfektion harter Oberflächen vorgesehen. Die Desinfektionsmittelzusammensetzung zeichnet sich auch durch eine hohe Materialverträglichkeit gegenüber einer Vielzahl von Oberflächenmaterialien aus, z.B. gegenüber Makrolon, Polystyrol und Plexiglas.

### Detaillierte Beschreibung der Erfindung:

Neben den Wirkstoffen a) bis c) und Wasser d) kann die Desinfektionsmittelzusammensetzung weitere Bestandteile als Additive enthalten. Dies sind z.B. Tenside, Stabilisatoren, Geruchsstoffe oder Farbstoffe.

Die Desinfektionsmittelzusammensetzung enthält nach einer Ausgestaltung ein oder mehrere anionische oder nichtionische Tenside. Diese sind z.B. ausgewählt aus C8- bis C16- Alkylarylsulfonsäuren und deren Alkalimetall- und Ammoniumsalzen, sulfonierte C12- bis C22- Carbonsäuren und deren Alkalimetall- und Ammoniumsalzen (z.B. Alkylsulfonate), C8- bis C22-Alkyldiphenylsulfonsäuren und deren Alkalimetall- und Ammoniumsalze, C8- bis C18- Alkalimetallalkylsulfate und deren Mischungen, alkoxylierte Fettalkohole, z.B. ethoxyliert (EO), propoxyliert (PO) oder ethoxyliert und propoxyliert (EO, PO), oder deren Mischungen. Nach einer weiteren Ausführungsform handelt es sich bei dem nichtionischen Tensid um alkoxylierte Carbonsäuren oder alkoxylierte Ethercarbonsäuren, z.B. ethoxyliert (EO), propoxyliert (PO) oder ethoxyliert und propoxyliert (EO, PO). Beispiele für Fettalkohol-Reste sind lineare oder verzweigte C8- bis C18- Alkohole. Der Alkoxylierungsgrad kann 2 bis 16 betragen.

Weiterhin kann die Desinfektionsmittelzusammensetzung ein oder mehrere Stabilisatoren (insbesondere für das Wasserstoffperoxid) enthalten, wie posphorbasierte Säuren oder deren Salze, wie Phosphorsäure, Polyphosphorsäure oder Phosphonate mit 1-5 Phosphonsäuregruppen oder auch Dipicolinsäure oder Butylhydroxytoluole. Geeignete Stabilisatoren sind z.B. 1-Hydroxyethyliden-1,1,-Diphosphonsäure (Etidronat) und deren Salze, insbesondere Natriumsalze, ggf. in Mischung mit Phosphonsäure, und/oder ein Salz der Methylglycindiessigsäure, insbesondere das Trinatriumsalz.

Je nach dem vorgesehenen Verwendungszweck kann die erfindungsgemäße Zusammensetzung auch noch Farbstoffe und/oder Parfüms enthalten. Dies können z.B. Alkohole, Ester, Nitrile o.ä. sein.

Der Gegenstand der Erfindung ist insbesondere die Verwendung der Zusammensetzung zur Desinfektion von harten Oberflächen. Unter harten Oberflächen sind beispielsweise Fußböden, Wände, Tische und Regale, Behälter oder Gerätschaften, wie sie beispielsweise in der Lebensmittel- und Agrarlebensmittelindustrie oder bei der Zubereitung, Verarbeitung, Zubereitung und Verpackung von Lebensmitteln und Getränken, in der Bioindustrie, der pharmazeutischen Industrie, der Kosmetikindustrie, in Reinräumen, in Gewächshäusern und Pflanzen- oder Tierzuchtgebäuden oder auch auf dem Gebiet der Hygiene und Gesundheit verwendet werden.

Ein besonderes Anwendungsgebiet für die erfindungsgemäßen Zusammensetzungen ist die Desinfektion harter Oberflächen in Krankenhausräumen, Arztpraxen und Pflegeheimen.

Die zu behandelnde harte Oberfläche kann aus einem beliebigen Material und insbesondere aus Glas, Aluminium oder rostfreiem Stahl, Keramik oder organischem Polymer, wie beispielsweise Polyethylen, Polypropylen, Polycarbonat, Polyamid, Polyester, wie Polyethylenterephthalat (PET), Polyurethan, Fluorpolymeren, wie PTFE, PVDF und PFA, und Polyvinylchlorid (PVC) und empfindlichen Kunststoffen wie Plexiglas, Polysulfon und Makrolon bestehen.

Nach einer Ausgestaltung der vorliegenden Erfindung wird die Desinfektionsmittelzusammensetzung von einem porösen Material, wie einem Schwamm, Papier, Bürstenfaser oder Stoff, absorbiert, wobei man eine gebrauchsfertige Formulierung absorbiert auf oder in einem festen Träger erhält. Geeignete feste Träger sind beispielsweise auch Vliesstoffe, Bürsten oder aus einem anderen textilen Material.

Insbesondere geeignete sind Tücher oder Mopps, wiederverwendbar oder zum einmaligen Gebrauch. Diese können z.B. aus Cellulose, Viskose, PET, PE, oder PP sein. Mopps liegen i.d.R. in Form austauschbarer Reinigungsbezüge, z.B. mit Fransen oder Schlingen, vor. Der Mopp kann z.B. auf oder an einer an einem Stiel ggf. drehbar befestigten Grundplatte befestigt bzw. mit einem Klettverschluss angeheftet sein. Der Mopp ist jeweils mit der Desinfektionsmittelzusammensetzung getränkt.

Die mit der Desinfektionsmittelzusammensetzung getränkten Tücher sind z.B. aus ihren Verpackungen einzeln entnehmbar. Die vorgetränkten Tücher können in Stapeln oder Rollen verpackt sein. Die Mopps und Tücher werden z.B. vorkonfektioniert, d.h. mit der Desinfektionsmittelzusammensetzung getränkt und sind z.B. in verschlossenen bzw. wieder verschließbaren Kunststoffbeuteln oder -gefäßen angeboten. Diese können auch für den Einmalgebrauch vorgesehen sein.

Zur Lagerstabilität: Bei Mischungen mit 30% Ethanol, 1,5 % Wasserstoffperoxid und 1% Glycolsäure hat sich die Glycolsäure bei Lagerung (40°C, 75% relative Luftfeuchtigkeit, 2 Mon) auf unter 90 % abgebaut. Der Geruch der Lösung war alkoholisch fruchtig. Dies deutet auf einen Abbau der Glycolsäure in den entsprechenden Ethylester hin. Bei einer vergleichbaren Mischung, bei der Ethanol durch den sekundären Alkohol Propan-2-ol ersetzt wurde, lag der analytische Wert der Glycolsäure bei annähernd 100%.

Der Geruch der Lösung war alkoholisch neutral. Der Ersatz von Ethanol durch Propan-2-ol und die damit verbundene reduzierte Esterbildung des sekundären Alkohols Propan-2-ol führt zu Lagerstabilitäten, die den üblichen regulatorischen Anforderungen entsprechen und die eine Vermarktung der Produkte als Ready-to-Use Produkte erlauben.

Die Herstellung der erfindungsgemäßen Desinfektionsmittelzusammensetzung für die mikrobiologische Prüfung erfolgte wie folgt (Prozentwerte bezogen auf die Gesamtzusammensetzung):
Wasser wurde vorgelegt, Stabilisator und Tenside (Additive) eingewogen, Glykolsäure, Propan-2-ol und Wasserstoffperoxid in den entsprechenden Mengen nach und nach eingerührt. Bei Zusammensetzung 1 wurde Propan-2-ol durch Wasser ersetzt. Die Gemische hatten einen pH-Wert von 2,1 bis 2,5 bei 20°C.

Es wurde eine mikrobiologische Untersuchung nach EN 17126 (C. difficile Sporen) und EN 14476 (Noroviren), dargestellt in log10-Reduktion, durchgeführt:

**Tabelle 1**

| Zusammensetzung Nr. | 1 | 2 | 3 | 4 |
|---|---|---|---|---|
| Propan-2-ol [Gew.%] | 0 | 30 | 30 | 30 |
| Glycolsäure [Gew.%] | 1,5 | 1,5 | 1,5 | 0 |
| Wasserstoffperoxid [Gew.%] | 1,5 | 1,5 | 1,5 | 0 |
| Additive [Gew.%] | <2 | <2 | <2 | <2 |
| Wasser | Rest | Rest | Rest | Rest |
| Wirksamkeit C. difficile⁽¹⁾ | 2,69 | >4,44 | >4,44 | <2,07 |
| Wirksamkeit Noroviren ⁽²⁾ | 2,88 | >4 | >4 | 0,63 |
| Wirksamkeit C. albicans⁽³⁾ | <1,9 | >4,27 | >4,27 | 3,80 |

| | | | | |
|---|---|---|---|---|
| (1) EN 17126, Einwirkzeit 30 Min, Wirksamkeit in log-Stufen, (2) EN 14476, Einwirkzeit 5 Min, Wirksamkeit in log-Stufen, (3) EN 13624, Einwirkzeit 2 Min, Wirksamkeit in log-Stufen, | | | | |

Die Zusammensetzung gilt laut jeweiliger Norm als wirksam ab 4 log10.

Die Zusammensetzungen (Lösungen) 1, 2, 3, und 4 wurden auf 60% mit Wasser verdünnt. Erhalten wurden dann Lösungen mit 18 Gew.% Propan-2-ol (2a, 3a, 4a) und 0,9 Gew.% Wasserstoffperoxid und 0,9 Gew.% Glycolsäure (1a, 2a, 3a), dargestellt in Tabelle 2.

**Tabelle 2**

| Zusammensetzung Nr. | 1a | 2a | 3a | 4a |
|---|---|---|---|---|
| Wirksamkeit C. difficile⁽¹⁾ | 1,11 | 4,18 | 4,69 | 0 |

| | | | | |
|---|---|---|---|---|
| (1) EN 17126, Einwirkzeit 30 Min, Wirksamkeit in log-Stufen, Zusammensetzung gilt laut Norm als wirksam ab 4 log. | | | | |

Die Zusammensetzungen 4 und 4a zeigten, dass Propan-2-ol allein gegen die klinisch außerordentlich relevanten unbehüllten Noroviren kaum wirksam und gegen C. difficile Sporen praktisch nicht wirksam ist.

Überraschend ist der synergistische Effekt bei C. difficile, der bei der Kombination von Wasserstoffperoxid, Glycolsäure und Propan-2-ol erreicht wird (Zusammensetzung 1 und 4 vs. 2 und 3 und Zusammensetzungen 1a und 4a vs. 2a und 3a).

Die Wirksamkeit wird zudem in einem Maß erhöht, dass die Auslobung der Wirksamkeit gegen C. difficile Sporen nach den Anforderungen der neuesten Europäischen Prüfnorm EN 17126 möglich wird. Auch bei der Norovirus-Wirksamkeit ist der wirksamkeitssteigernde Einfluss von Propan-2-ol auf Mischungen von Wasserstoffperoxid/Glycolsäure deutlich. Auch hier erreichen die Zusammensetzungen 2 und 3 eine Wirksamkeit, die die Auslobung einer Norovirus-Wirksamkeit nach aktueller Europäischer Norm EN 14476 zulässt. Zusätzlich gleicht das zugesetzte Propan-2-ol die bei Wasserstoffperoxid und Wasserstoffperoxid/Carbonsäuren-Mischungen bekannte Wirkungsschwäche gegen C. albicans ("Pilzschwäche") aus.

Die Materialverträglichkeit wurden untersucht mit einem Immersions-Testmodell und in Anlehnung an "DIN *EN ISO* 175 - 2011-03 Kunststoffe - Prüfverfahren zur Bestimmung des Verhaltens gegen flüssige Chemikalien" durchgeführt. Von den Zusammensetzungen 2, 3, 2a und 3a wurden jeweils 20 ml in ein 100 ml Schraubdeckelglas pipettiert und Prüfkörper (Plättchen aus Polysulfon, Makrolon, Plexiglas, ca. 7 cm hoch, 2 cm breit) eingestellt. Die Schraubdeckelgläser wurden verschlossen. Nach 7 Tagen Einwirkzeit wurden die Prüfkörper mit Wasser gespült, getrocknet und optisch bewertet.

**Tabelle 3**

| Zusammensetzung | Polysulfon | Makrolon | Plexiglas |
|---|---|---|---|
| 2 | Keine Veränderung | Keine Veränderung | Keine Veränderung |
| 3 | Keine Veränderung | Keine Veränderung | Keine Veränderung |
| 2a | Keine Veränderung | Keine Veränderung | Keine Veränderung |
| 3a | Keine Veränderung | Keine Veränderung | Keine Veränderung |

## Patentansprüche

1. Desinfektionsmittelzusammensetzung umfassend zumindest:
a) 12 bis 45 Gew.% Propan-2-ol;
b) 0,1 bis 5 Gew.% Wasserstoffperoxid;
c) 0,001 bis 5 Gew.% Glycolsäure; und
d) mindestens 50 Gew.% Wasser.

2. Desinfektionsmittelzusammensetzung nach Anspruch 1 umfassend auch jeweils unabhängig voneinander:
a) 15 bis 35 Gew.% Propan-2-ol;
b) 0,5 bis 3 Gew.%, bevorzugt 0,8 bis 2 Gew.%, Wasserstoffperoxid;
c) 0,001 bis 3 Gew.%, bevorzugt 0,01 bis 1,5 Gew.% und besonders bevorzugt 0,05 bis 1,0 Gew.% Glycolsäure;
d) größer 60 Gew.% das Wasser.

3. Desinfektionsmittelzusammensetzung nach zumindest einem der vorhergehenden Ansprüche aufweisend einen pH-Wert von 1 bis 5, bevorzugt von 2 bis 3.

4. Desinfektionsmittelzusammensetzung nach zumindest einem der vorhergehenden Ansprüche umfassend weiterhin ein oder mehrere der folgenden Additive:
- ein oder mehrere Tenside, anionisch oder nicht-ionisch;
- Farbstoffe;
- Parfüms;
- posphorbasierte Säuren, Dipicolinsäure und/oder Butylhydroxytoluole als Stabilisatoren.

5. Desinfektionsmittelzusammensetzung nach zumindest einem der vorhergehenden Ansprüche wobei a) bis d) zusammen größer 90 Gew.%, insbesondere größer 95 Gew.% der Desinfektionsmittelzusammensetzung ausmachen.

6. Tücher oder Mopps jeweils getränkt mit der Desinfektionsmittelzusammensetzung nach zumindest einem der vorhergehenden Ansprüche, insbesondere gebrauchsfertig vorkonfektioniert und verpackt.

7. Verfahren zur Desinfektion harter Oberflächen mit der Desinfektionsmittelzusammensetzung oder den Tüchern oder Mopps nach zumindest einem der vorhergehenden Ansprüche umfassend ein Aufbringen der Desinfektionsmittelzusammensetzung auf die harten Oberflächen,
insbesondere durch Aufbringen der Desinfektionsmittelzusammensetzung auf die harten Oberflächen mittels den Tüchern oder Mopps, die mit der Desinfektionsmittelzusammensetzung getränkt sind.

8. Verwendung der Desinfektionsmittelzusammensetzung oder der Tücher oder der Mopps nach zumindest einem der Ansprüche 1 bis 6
- gegen Sporen, insbesondere mit einer Sporenwirksam von 4 log in höchstens 60 Min.
- gegen C. difficile Sporen, insbesondere nach EN 17126; und/oder
- gegen Viren, vorzugsweise gegen Norovirus, insbesondere nach EN 14476; insbesondere jeweils auf harten Oberflächen.

9. Verwendung der Desinfektionsmittelzusammensetzung oder der Tücher oder der Mopps nach zumindest einem der Ansprüche 1 bis 6 zur Reinigung bzw. Desinfektion harter Oberflächen.
